# EUROPÄISCHE PATENTSCHRIFT

(11) **EP 3 160 828 B1**
(45) Veröffentlichungstag und Bekanntmachung des Hinweises auf die Patenterteilung: **08.11.2017**
(21) Anmeldenummer: 15736395.3
(22) Anmeldetag: 17.06.2015
(51) Int. Cl.: B62D 21/14

(54) **TRANSPORTFAHRZEUG, INSBESONDERE EIN SELBSTANGETRIEBENES TRANSPORTFAHRZEUG, MIT VARIABLER BREITE**
TRANSPORT VEHICLE, ESPECIALLY SELF-PROPELLED TRANSPORT VEHICLE, HAVING A VARIABLE WIDTH
VÉHICULE DE TRANSPORT, NOTAMMENT VÉHICULE DE TRANSPORT AUTOMOTEUR, DE LARGEUR VARIABLE

(30) Priorität: 24.06.2014 DE 102014009036; 24.06.2014 DE 202014005055 U
(43) Veröffentlichungstag der Anmeldung: 03.05.2017
(73) Patentinhaber: Scheuerle Fahrzeugfabrik GmbH, 74629 Pfedelbach (DE)
(72) Erfinder: KRÄMER, Axel, 74629 Pfedelbach (DE); BANNERT, Kurt, 74629 Pfedelbach (DE); RÜGER, Stefan, 74629 Pfedelbach (DE)
(74) Vertreter: Leitner, Waldemar
(86) Internationale Anmeldenummer: PCT/EP2015/001223
(87) Internationale Veröffentlichungsnummer: WO 2015/197173

(56) Entgegenhaltungen:
- WO-A1-96/39320
- WO-A1-2010/048674
- WO-A1-2010/094935
- DE-A1- 19 721 121
- US-A1- 2009 160 163

## Beschreibung

Die Erfindung betrifft ein Transportfahrzeug, insbesondere ein selbstangetriebenes Transportfahrzeug, das ein Fahrwerk mit mindestens zwei nebeneinander und beabstandet zueinander angeordneten Lastträger aufweist, deren gegenseitiger Abstand zur Veränderung der Breite des Transportfahrzeugs veränderbar ist.

Zum Transport von Lasten mit Überbreiten bzw. zur Rückfahrt des Transportfahrzeugs ohne Last ist es ein Vorteil, wenn die Breite des zum Transport einer Schwerlast verwendeten Fahrzeugs verändert werden kann. Außerdem gelten in einigen Bundesstaaten der USA spezielle gesetzliche Bestimmungen für Fahrzeug zum Transport von Schwerlasten, durch welche die zulässige Last pro Achse in Abhängigkeit von der Spurweite des Fahrzeugs beschränkt wird, so dass eine veränderbare Breite und somit Spurweite von Vorteil ist, um die gesetzlichen Bestimmungen zu erfüllen und die maximal mögliche Achslast auszunutzen, Hierzu ist beim bekannten Transportfahrzeug vorgesehen, dass zwischen den beiden parallel verlaufenden Lastträgern ein zentraler Träger angeordnet und die beiden Lastträger mit dem Zentralträger über in ihrer Länge veränderliche Querträger verbunden sind. Durch eine entsprechende Verschiebung der Lastträger ist es somit möglich, die Breite des bekannten Transportfahrzeugs und somit seine Spurweite zu verändern.

Aus der WO 2010/048674 A1 ist ein Transportfahrzeug bekannt, welches zwei nebeneinander und beabstandet zueinander angeordnete Lastträger aufweist, deren gegenseitiger Abstand zur Veränderung der Breite des Transportfahrzeugs veränderbar ist. Zwischen den beiden Lastträgern ist ein X-förmiges Verbindungselement angeordnet, welches zwei über ein mittig angeordnetes Gelenk miteinander verbundene Streben besitzt. Die erste Strebe verläuft vom vorderen Bereich des ersten Lastträgers zum hinteren Bereich des zweiten Lastträgers, die zweite Strebe vom vorderen Bereich des zweiten Lastträgers zum hinteren Bereich des ersten Lastträgers, sodass sich die beiden Streben in ihrer Mitte überkreuzen und an dieser Stelle durch ein Gelenk miteinander verbunden sind. Jeder der beiden Streben ist im hinteren Bereich des entsprechenden Lastträgers gelenkig, aber nicht-verschiebbar mit diesem verbunden. Die vorderen Enden der beiden Streben sind in Schiebeführungen gelenkig aufgenommen, sodass sie entlang der Lastträger beweglich sind. Werden die beiden Lastträger auseinanderbewegt, so werden die vorderen Enden der beiden Streben entlang ihrer Schiebeführungen in Richtung des hinteren Endes der Lastträger bewegt, sodass sich das durch die beiden sich kreuzen Streben aufgespannte X verbreitert. Zur Verringerung der Breite des Fahrzeugs werden die vorderen Endbereiche der Streben nach vorne geschoben, sodass sich das durch die beiden sich kreuzenden Streben äusgebildete X verschmälert.

Aus der WO 96/39320 A1 ist ein Rollstuhl bekannt, bei dem das vorstehend beschriebene Konstruktionsprinzip gleichfalls verwirklicht ist. Dieser Rollstuhl weist zwei Längsrahmen auf, zwischen denen zwei Streben in einer X-Konfiguration angeordnet sind. Das vordere Ende der sich überkreuzenden Streben ist jeweils verschiebbar an dem jeweiligen Längsrahmen angeordnet, und das hintere Teil der beiden Streben fest mit dem entsprechenden Längsrahmen verbunden.

Aus der US-A-4 221 398 ist bereits ein Transportfahrzeug der eingangs genannten Art in Form eines Deichselanhängers und eines Tiefladers mit mehreren Lenkachsen bekannt, dessen Breite und Spurweite ebenfalls bei Bedarf vergrößert bzw. verkleinert werden können, indem zwei Fahrgestellteile, die jeweils eine Reihe von Rad-Drehgestellen tragen, quer zur Fahrtrichtung bzw. zu einer vertikalen Längsmittelebene des Transportfahrzeugs auseinander bzw. zusammen bewegt werden. Die Rad-Drehgestelle jeder Lenkachse werden dort unabhängig voneinander mittels getrennter Lenkzylinder gelenkt, die in jedem der beiden Fahrgestellteile angeordnet sind.

Desweiteren sind beispielsweise aus der US-A-4772038, der US-A-5118245 oder der US-A-53126128 Transportfahrzeuge mit einer veränderbaren Breite und Spurweite bekannt. Die US-A-3339942 offenbart einen Tieflader mit variabler Spurweite, dessen Breite bei Leerfahrten reduziert werden kann.

Die DE 2 219 447 A offenbart ein Transportfahrzeug in Form eines Tiefladers mit zwei Traversen oder Lastträgern, die jeweils eine Reihe von hintereinander angeordneten lenkbaren Rad-Drehgestellen tragen, sowie mit zwei Zugvorrichtungen. Um beim Lenken die Rad-Drehgestelle beider Traversen gleichzeitig zu lenken, sind insgesamt vier arretierbare und teleskopierbare Spurstangen vorgesehen, die paarweise zwischen jeder der Zugvorrichtungen und den Rad-Drehgestellen der benachbarten Lenk- oder Pendelachse angeordnet sind. Dies bedeutet jedoch, dass bei jeder Vorstellung der Breite und Spurweite des Tlefladers die Länge von allen vier teleskopierbaren Spurstangen verstellt und nach der Verstellung erneut arretiert werden muss, was erhebliche Rüstzeiten verursacht. Zudem schließen die teleskopierbaren Spurstangen mit der Fahrzeuglängsachse einen Winkel von ungleich 90 Grad ein, der sich bei der Verstellung der Breite und Spurweite des Tiefladers auch noch verändert, so dass das Maß der notwendigen Längenverstellung der Spurstangen nicht dem Maß der Verstellung der Spurweite entspricht, sondern für die verschiedenen Spurweiten in Abhängigkeit von der Winkellage der Spurstangen berechnet werden muss. Darüber hinaus führt das Einschlagen einer Zugvorrichtung zu unterschiedlichen Winkelausrichtungen der beiden beiderseits der Zugvorrichtung angeordneten Spurstangen, so dass zur Übertragung der Schwenkbewegung der Zugvorrichtung auf die beiden Rad-Drehgestelle der benachbarten Lenk- oder Pendelachse trotz einer relativ komplizierten Kinematik zweifelhaft erscheint, ob die Lenkwinkel dieser beiden Rad-Drehgestelle identisch sind.

Es ist Aufgabe der vorliegenden Erfindung, ein Transportfahrzeug, insbesondere ein selbstangetriebenes Transportfahrzeug, der eingangs genannten Art derart weiterzubilden, dass bei einem einfachen Aufbau eine Breiten- und somit Spurverstellung möglich ist, dass mindestens eine Gelenkschere zwei Arme aufweist, deren erste Endbereiche mit jeweils einem Lastträger gelenkig und deren zweite Endbereiche über ein Gelenk verbunden sind, das mindestens eine Gelenkschere zwei Arme aufweist, sodass der erste Endbereich des ersten Arms gelenkig mit dem ersten Lastträger und der erste Endbereich des zweiten Arms dieser Gelenkschere gelenkig mit dem zweiten Lastträger verbunden ist, und sodass der zweite Endbereich des ersten Arms und der zweite Endbereich des zweiten Arms über ein Gelenk miteinander verbunden sind.

Die Aufgabe wird erfindungsgemäß dadurch gelöst, dass mindestens zwei Lastträger des Transportfahrzeugs durch mindestens eine Gelenkschere miteinander verbunden sind.

Durch die erfindungsgemäßen Maßnahmen wird in vorteilhafter Art und Weise ein in seiner Breite und somit in seiner Spurweite veränderliches Transportfahrzeug geschaffen, welches sich dadurch auszeichnet, dass diese Breitenverstellung mit einfachen Mitteln, nämlich mit Gelenkscheren, zu bewerkstelligen ist. In vorteilhafter Art und Weise sind die beiden durch die Gelenkscheren verbundenen Lastträger des Fahrwerks nur durch die Gelenkscheren sowie vorzugsweise einen in seiner Länge veränderlichen Querträger miteinander verbunden. Die Ausbildung der die Lastträger tragenden Radanordnungen wird somit von der durch die erfindungsgemäßen Maßnahmen erzielten Breiten- und somit Spurverstellbarkeit nicht beeinflusst.

Eine vorteilhafte Weiterbildung der Erfindung sieht vor, dass mindestens eine, vorzugsweise aber alle oder fast alle Radanordnungen des Transportfahrzeugs lenkbar ausgeführt sind. Eine derartige Maßnahme besitzt der Vorteil, dass die Breitenverstellung des erfindungsgemäßen Transportfahrzeugs durch eine entsprechende Positionierung der Räder der Radanordnungen in Verbindung mit einer daran anschließenden Fahrbewegung des Transportfahrzeugs erzielbar ist.

Eine weitere vorteilhafte Weiterbildung der Erfindung sieht vor, dass das Transportfahrzeug mindestens ein mindestens an einer Gelenkschere angreifendes Mittel zur Änderung der Winkellage der Arme der entsprechenden Gelenkschere aufweist. Vorzugsweise ist hierbei vorgesehen, dass dieses Mittel, insbesondere ein doppeltwirkender Zylinder, zwischen zwei zusammenwirkenden Gelenkscheren angeordnet ist, so dass durch eine Beaufschlagung der Gelenkscheren eine Änderung des Abstands ihrer Gelenkpunkte in Richtung der Lastträger ermöglicht wird. Die dabei bewirkte Änderung der Winkellage der Arme der Gelenkscheren führt in vorteilhafter Weise zu einer Änderung der Breite des Transportfahrzeugs.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im Folgenden anhand der beiden Ausführungsbeispiele beschrieben werden. Es zeigen:
- Figur 1: eine perspektivische Darstellung eines ersten Ausführungsbeispiels eines Transportfahrzeugs,
- Figur 2: Seitenansicht des Ausführungsbeispiels,
- Figur 3: eine Draufsicht auf das erste Ausführungsbeispiel bei vergrößerter Breite,
- Figur 4: eine Draufsicht auf das erste Ausführungsbeispiel bei verkleinerter Breite,
- Figur 5: eine Draufsicht auf ein zweites Ausführungsbespiel bei vergrößerter Breite, und
- Figur 6: eine Draufsicht auf das zweite Ausführungsbeispiel bei verkleinerter Breite,

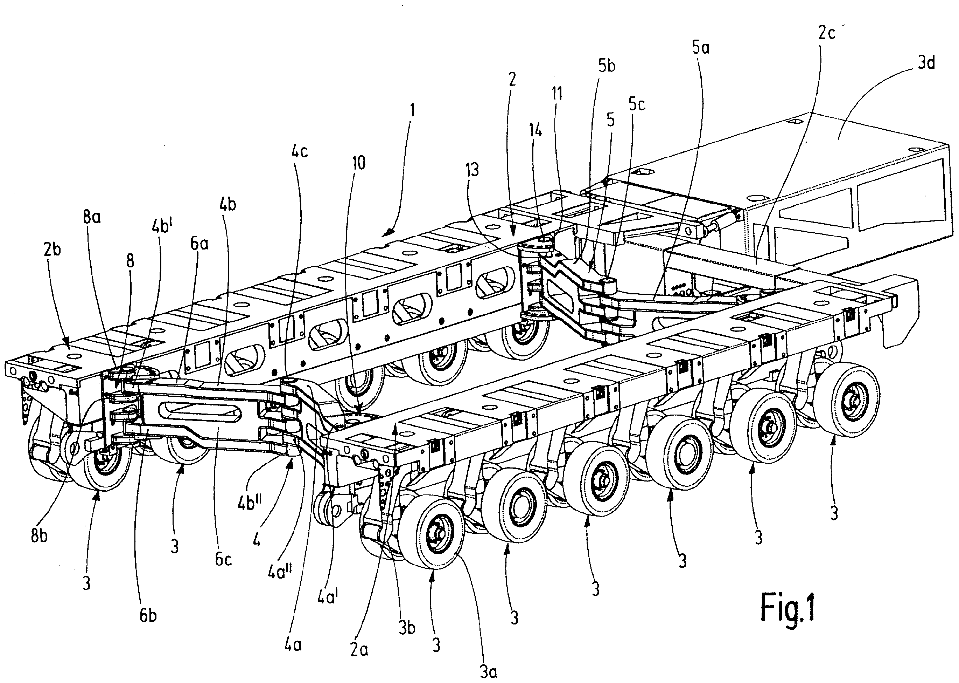

In den Figuren 1 bis 4 ist ein allgemein mit 1 bezeichnetes erstes Ausführungsbeispiel eines Transportfahrzeugs dargestellt, welches in dem hier beschriebenen Fall als ein selbstangetriebenes Transportfahrzeug ausgebildet ist. Derartige selbstangetriebene Transportfahrzeuge sind unter der Bezeichnung SPMT-Fahrzeuge (self-propelled modular trailer) bekannt und müssen daher nicht mehr im Detail beschrieben werden.

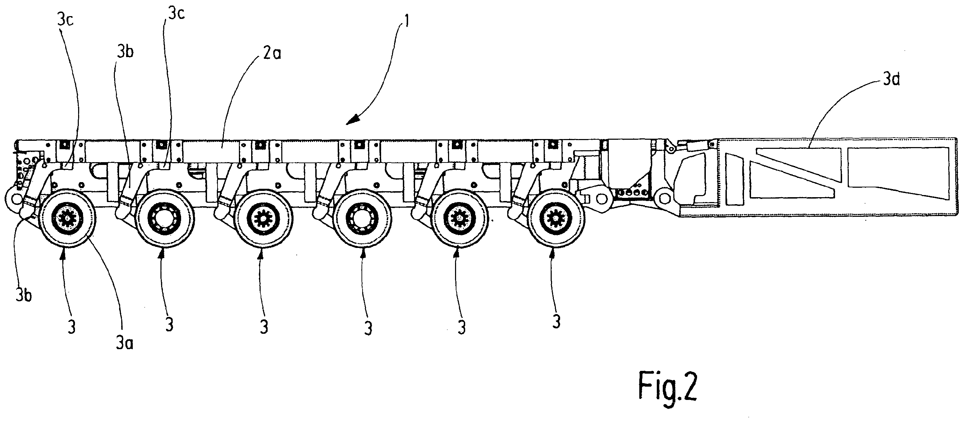

Das Transportfahrzeug 1 besitzt ein Fahrgestell 2, das zwei beabstandet angeordnete und in Querrichtung relativ zueinander bewegliche Lastträger 2a und 2b aufweist. Diese sind vorzugsweise gleichartig aufgebaut sind, so dass im weiteren nur der in Figur 1 rechte Lastträger 2a genauer beschrieben wird. Unter dem Lastträger 2a ist eine Anzahl von Rad-Anordnungen 3 vorgesehen, die jeweils ein Doppelrad 3a aufweisen, welches über eine Pendelachse 3b mit einem Drehkranz 3c (siehe Figur 2) der Rad-Anordnung 3 verbunden sind. Die zum Antrieb sowie zur Lenkung der Rad-Anordnungen 3 erforderliche Antriebsenergie wird von einer Antriebseinheit 3d bereitgestellt, wie sie zum Beispiel unter der Bezeichnung PPU (Power Pack Unit) bekannt ist und daher nicht mehr näher beschrieben wird.

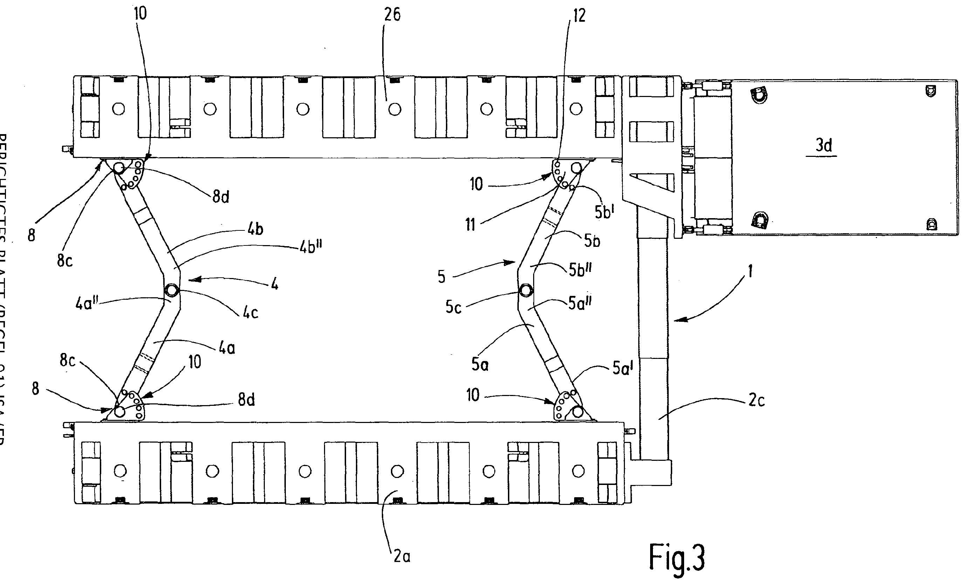

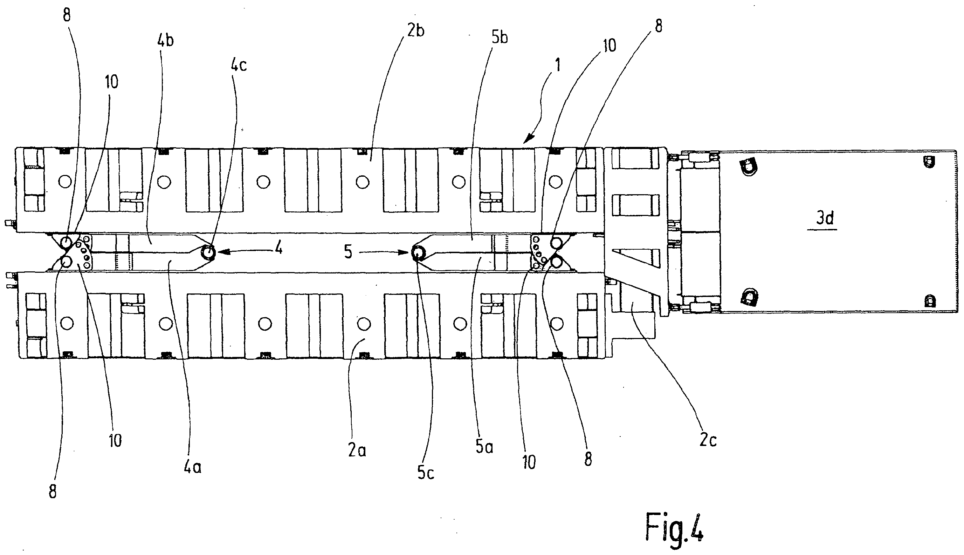

Wesentlich ist nun, dass die beiden Lastträger 2a und 2b des Fahrgestells 2 durch zwei Gelenkscheren 4 und 5 miteinander verbunden sind, die jeweils zwei Arme 4a und 4b bzw. 5a und 5b aufweisen. Ein erster Endebereich 4a' bzw. 4b' der Arme 4a und 4b der ersten Gelenkschere 4 ist - wie am besten aus den Figuren 3 und 4 ersichtlich - beweglich an je einem der beiden Lastträger 2a und 2b des Fahrgestells 2 angelenkt und die beiden zweiten Endbereiche 4a", 4b" der Arme 4a , 4b sind über ein Gelenk 4c miteinander verbunden. In entsprechender Art und Weise sind die ersten Endbereiche 5a' und 5b' der beiden Arme 5a und 5b der zweiten Gelenkschere 5 mit den Lastträgern 2a und 2b gelenkig verbunden und ihre zweiten Endbereiche 5a", 5b" sind über ein Gelenk 5c miteinander verbunden. Jeder der Arme 4a, 4b und 5a, 5b der beiden Gelenkscheren 4 und 5 weist zwei übereinander angeordnete Träger 6a und 6b auf, die durch ein Verbindungsstück 6c derart miteinander verbunden sind, dass die beiden Träger 6a und 6b an beiden Enden über das Verbindungsstück 6c hinaus ragen, so dass überstehende Endbereiche 6a' bzw. 6b' ausgebildet werden, die einen Freiraum begrenzen. Die Endbereiche 6a' und 6b' der beiden Träger 6a und 6b eines jeden der Arme 4a, 4b und 5a, 5b der Gelenkscheren 4 und 5 können somit jeweils zwischen Anlenkelemente 8a und 8b eines Gelenks 8, welches mit den Lastträgern 2a und 2b fest verbunden sind, eingeschoben werden. Die Anlenkelemente 8a und 8b sowie die Endbereiche 4a', 4b' und 5a', 5b' der Arme 4a, 4b und 5a, 5b der Gelenkscheren 4 und 5 weisen jeweils eine Öffnung 8c auf, durch die ein Bolzen 8d des Gelenks 8 durchschiebbar ist, so dass die Arme 4a, 4b und 5a, 5b der Gelenkscheren 4 und 5 gelenkig mit den Lastträgern 2a und 2b verbunden sind.

Die beiden Lastträger 2a und 2b sind durch einen in seiner Länge veränderlichen Querträger 2c fest miteinander verbunden, wodurch die Stabilität des Fahrzeugs 1 erhöht wird.

Die Gelenke 8 weisen eine Einrichtung 10 zur Festlegung der Winkellage der Arme 4a-5b' der Gelenkscheren 4 und 5 in bezug auf die Lastträger 2a und 2b auf. Diese besitzt eine Lochplatte 11, die mehrere ein Lochbild ausbildende Öffnungen 12 aufweist, die konzentrisch zu der durch den Bolzen 8d ausgebildeten Drehachse der Gelenke 8 angeordnet sind. Jeder Arm 4a, 4b und 5a, 5b der Gelenkscheren 4 und 5 weist eine Ausnehmung 13 auf, die derart angeordnet ist, dass ein durch eine der Öffnungen 12 des Lochbilds durchgesteckter Bolzen 14 in die entsprechende Ausnehmung 13 des jeweiligen Arms 4a, 4b, 5a, 5b eintauchen und derart den Arm 4a, 4b, 5a, 5b in seiner je zu der jeweiligen Öffnung des Lochbilds korrelierten Winkellage festlegen kann.

Die Breitenverstellung des beschriebenen Fahrzeugs 1 erfolgt nun wie nachstehend beschrieben: Zuerst werden die Bolzen 14 entfernt, so dass die Arme 4a, 4b und 5a, 5b der Gelenkscheren 4 und 5 nicht mehr in ihrer entsprechende Winkellage festgelegt sind. Sollen die beiden Lastträger 2a und 2b von ihrer in Figur 3 gezeigten breiteren Stellung in ihre in Figur 4 gezeigte engere Stellung bewegt werden, so erfolgt dies beim beschriebenen ersten Ausführungsbeispiel in vorteilhafter Art und Weise durch entsprechende Fahrbewegungen des Transportfahrzeugs 1. Dies besitzt den Vorteil, dass zur Breitenverstellung des Transportfahrzeugs 1 keine weiteren Einrichtungen wie z.B. Hydraulikzylinder, Doppelräder, durch welche die Lastträger 2a und 2b voneinander weg- und zubewegbar sind, erforderlich sind. Um nun die Lastträger 2a und 2b zusammen zu bewegen, so werden die Lenkachsen der Radanordnungen 3 der beiden Lastträger 2a und 2b derart positioniert, dass die Doppelräder 3a - in Richtung der nachfolgenden Fahrbewegung gesehen - nach innen weisen. Wird das Transportfahrzeug 1 in dieser Fahrrichtung bewegt, so bewirkt dies, dass die Doppelräder 3a sich aufeinander zu bewegen und die Lastträger 2a und 2b sich infolge dieser Fahrbewegung nach innen bewegen. Gleichzeitig schiebt sich der längenveränderliche, vorzugsweise teleskopierbare Querträger 2c zusammen. Nachdem die gewünschte Breite des Transportfahrzeugs 1 durch die vorstehend beschriebene Fahrbewegung erreicht wurde, werden die Bolzen 14 wieder durch die entsprechenden Öffnungen 12 des Lochbildes der Lochplatte 11 gesteckt und derart die Arme 4a, 4b und 5a, 5b und somit die mit ihnen verbundenen Lastträger 2a und 2b in einer definierten Position zueinander festgelegt.

Ein Auseinanderbewegen der Lastträger 2a und 2b erfolgt entsprechend: Nachdem die Verriegelungselemente der Einrichtung 10, hier also die Bolzen 14, entfernt wurden, werden die Lenkachsen der Radanordnungen 6 derart positioniert, dass die Doppelräder 3a - in der vorgenannten Fahrrichtung gesehen - gespreizt auseinander laufend angeordnet sind. Wird nun das Transportfahrzeug 1 in diese Richtung bewegt, bewegen die Räder 3a nach außen, wodurch die Lastträger 2a und 2b voneinander wegbewegt werden. Nach dem Erreichen der gewünschten Breite werden dann wieder die Bolzen 14 in den entsprechenden Öffnungen 12 der Lochbilder 11 eingesetzt. Dadurch wird eine Festlegung der Gelenkscheren 4 und 5 hinsichtlich ihrer Winkellage und somit des Abstandes zwischen den Lastträgern 2a und 2b erreicht.

Natürlich ist es auch möglich, dass das Transportfahrzeug 1 dem Fachmann bekannte und daher in den Figuren nicht gezeigte Mittel, z.B. hydraulische oder pneumatische Zylinder, welche in Querrichtung an den Lastträgern 2a und 2b angreifen, aufweist, um durch diese Mittel die Winkellage der Arme 4a, 4b und 5a, 5b der beiden Gelenkscheren 4 und 5 und den Lastträgern 2a und 2b zu verändern.

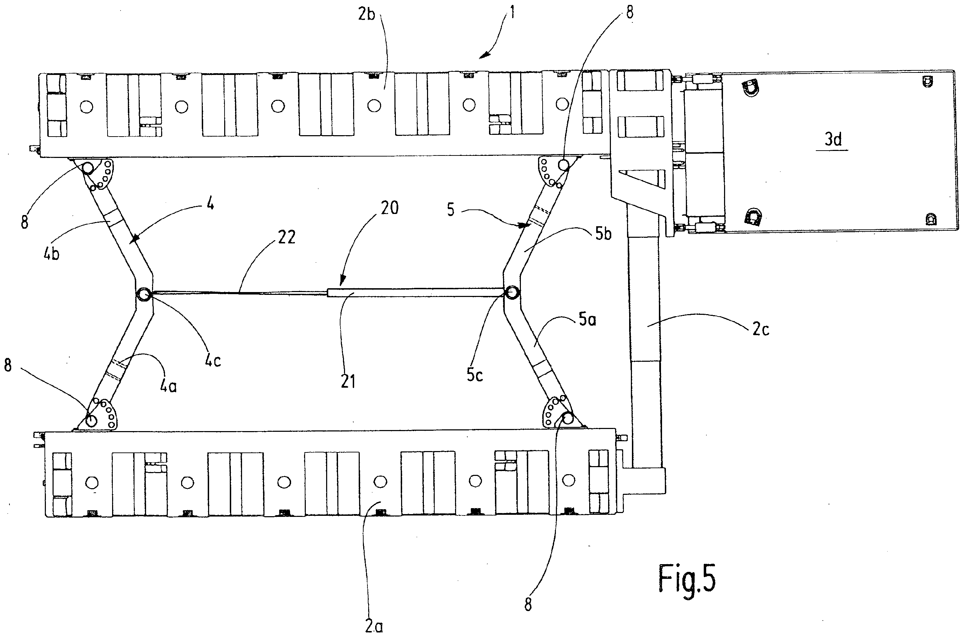

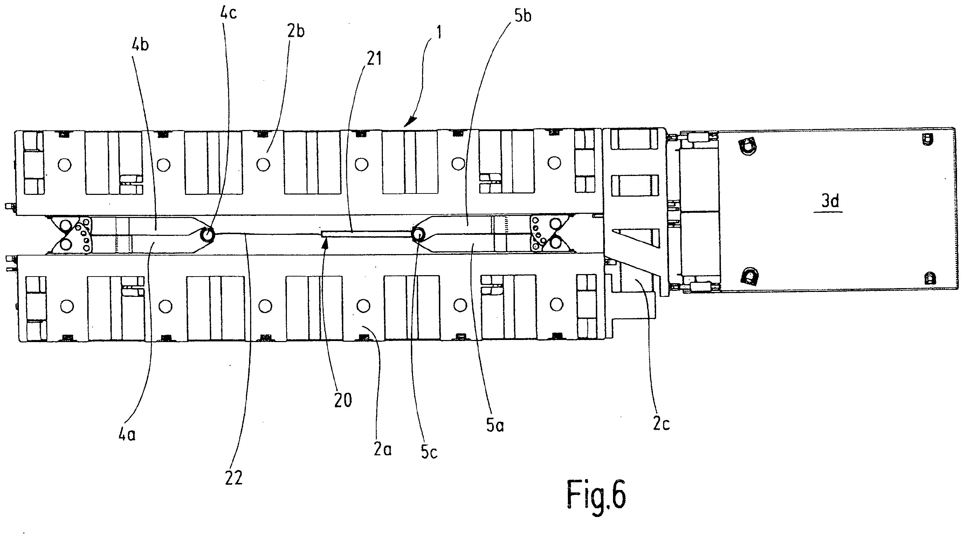

Auch ist es möglich, dass zwischen den Gelenkscheren 4 und 5 eine entsprechende Einrichtung 20 angeordnet ist, durch welche der Längsabstand zwischen den Gelenken 4c und 5c der Gelenkscheren 4 und 5 veränderbar ist, woraus ebenfalls eine Änderung der Winkellage der Arme 4a, 4b und 5a, 5b der Gelenkscheren 4 und 5 und somit des Abstands der beiden Lastträger 2a und 2b erreichbar ist. Bei dem in den Figuren 5 und 6 gezeigten zweiten Ausführungsbeispiel ist vorgesehen, dass diese Einrichtung 20 zur Änderung des Längsabstandes der Gelenke 4c und 5c der Gelenkscheren 4 und 5 ein hydraulischer betriebener doppelt-wirkender Zylinder 21 ist: Durch ein Ausfahren einer Kolbenstange 22 des doppelt-wirkenden Zylinders 21 werden die Gelenke 4c und 5c in Längsrichtung des Transportfahrzeugs 1 voneinander weg bewegt, wodurch die beiden Lastträger 2a und 2b auseinander bewegt werden. In entsprechender Art und Weise bewirkt ein Einfahren der Kolbenstange 22 des doppelt-wirkenden Zylinders 21, dass sich der Abstand zwischen den Gelenken 4c und 5c verringert, wodurch die Lastträger 2a und 2b aufeinander zubewegt und derart die Breite des Transportfahrzeugs 1 und somit seine Spurweite verringert wird. Von Vorteil ist, wenn hierbei das Auseinander- und Zusammenbewegen der Lastträger 2a und 2b durch eine entsprechende Positionierung der Räder 3a der Radanordnungen 3 unterstützt wird.

Bei der vorstehenden Beschreibung wurde davon ausgegangen, dass das Fahrwerk 2 des Transportfahrzeugs 1 nur die beiden durch die Gelenkscheren 4 und 5 miteinander verbundenen Lastträger 2a und 2b besitzt. Es ist natürlich auch möglich, die vorstehend beschriebene Anordnung zu kaskadieren, z.B., dass außer den beiden vorstehend beschriebenen, durch die Gelenkscheren 4 und 5 verbundenen Lastträgern 2a und 2b noch mindestens ein weiterer Lastträger des Fahrwerks 2 vorgesehen ist, der wiederum über weitere Gelenkscheren mit dem benachbarten Lastträger 2a bzw. 2b verbunden ist. Es ist auch möglich, mehr als drei Lastträger 2a, 2b vorzusehen und jeweils benachbarte Lastträger über Gelenkscheren 4 und 5 miteinander zu verbinden.

Bei der vorstehenden Beschreibung wurde davon ausgegangen, dass zwischen benachbarten Lastträgern 2a und 2b zwei Gelenkscheren 4 und 5 angeordnet sind. Auch dies ist nicht zwingend, vielmehr ist es möglich, nur eine Gelenkschere 4 oder 5 zwischen den beiden Lastträgern 2a oder 2b anzuordnen, obwohl dies nicht bevorzugt wird. Bei entsprechend langen Lastträgern 2a und 2b ist es vorteilhaft, mehr als zwei Gelenkscheren 4 und 5 vorzusehen.

Die Ausbildung der Radanordnungen 3 des Transportfahrzeugs 1 mit entsprechenden Lenksachsen wird zwar bevorzugt, da dies eine besonders einfache und elegante Möglichkeit bietet, den Abstand der Lastträger 2a und 2b und somit die Breite des Transportfahrzeugs 1 durch eine entsprechende Fahrbewegung zu verändern. Dies ist aber nicht zwingend. Es ist z.B. auch möglich, durch eine Querbeaufschlagung eines oder beider Lastträger 2a und/oder 2b auf die Gelenkscheren 4 und/oder 5 eine Kraft aufzubringen, welche in einer Änderung der Winkellage der Lastarme 4a, 4b und/oder 5a, 5b und somit einer Änderung des Abstands der beiden Lastträger 2a und 2b resultiert. Hierbei werden die Doppelräder 3a der Radanordnung 3 de facto über den das Transportfahrzeug 1 tragenden Untergrund geschoben.

Zusammenfassend ist festzuhalten, dass durch die beschriebenen Maßnahmen ein Transportfahrzeug 1 ausgebildet wird, welches sich durch seine einfache Breiten- und somit Spurweitenverstellung auszeichnet. Indem mindestens zwei Lastträger 2a, 2b des Fahrwerks 2 des Transportfahrzeugs 1 durch eine oder mehrere Gelenkscheren 4, 5 mit einander verbunden sind, kann durch eine einfache Fahrbewegung des Transportfahrzeugs 1 in Verbindung mit entsprechend ausgebildeten Radanordnungen 3 der Abstand der entsprechenden Lastträger 2a und 2b vergrößert oder verringert werden.

## Patentansprüche

1. Transportfahrzeug, insbesondere ein selbstangetriebenes Transportfahrzeug, das ein Fahrwerk (2) mit mindestens zwei nebeneinander und beabstandet zueinander angeordneten Lastträger (2a, 2b) aufweist, deren gegenseitiger Abstand zur Veränderung der Breite des Transportfahrzeugs (1) veränderbar ist, **dadurch gekennzeichnet, dass** mindestens zwei Lastträger (2a, 2b) des Transportfahrzeugs (1) durch mindestens eine Gelenkschere (4, 5) miteinander verbunden sind, dass mindestens eine Gelenkschere (4, 5) zwei Arme (4a, 4b; 5a, 5b) aufweist, deren erste Endbereiche (4a', 4b'; 5a', 5b') mit jeweils einem Lastträger (2a; 2b) gelenkig und deren zweite Endbereiche (4a", 4b"; 5a", 5b") über ein Gelenk (4c; 5c) verbunden sind, das mindestens eine Gelenkschere (4, 5) zwei Arme (4a, 4b; 5a, 5b) aufweist, sodass der erste Endbereich (4a'; 5a') des ersten Arms (4a; 5a) gelenkig mit dem ersten Lastträger (2a) und der erste Endbereich (4b'; 5b') des zweiten Arms (4b; 5b) dieser Gelenkschere (4; 5) gelenkig mit dem zweiten Lastträger (2b) verbunden ist, und sodass der zweite Endbereich (4a"; 5a") des ersten Arms (4a; 5a) und der zweite Endbereich (4b"; 5b") des zweiten Arms (4b; 5b) über ein Gelenk (4c, 5c) miteinander verbunden sind.

2. Transportfahrzeug nach Anspruch 1, **dadurch gekennzeichnet, dass** zwischen den benachbarten Lastträgern (2a, 2b) zwei Gelenkscheren (4, 5) angeordnet sind.

3. Transportfahrzeug nach einem der vorangehenden Ansprüche, **dadurch gekennzeichnet, dass** mindestens zwei Lastträger (2a, 2b) durch mindestens einen längenveränderlichen Querträger (2c) miteinander verbunden sind.

4. Transportfahrzeug nach einem der vorangehenden Ansprüche, **dadurch gekennzeichnet, dass** jede Gelenkschere (4; 5) mindestens eine Einrichtung (10) zur Festlegung der Winkellage eines Arms (4a, 4b; 5a, 5b) relativ zu dem zugeordneten Lastträger (2a, 2b) aufweist.

5. Transportfahrzeug nach Anspruch 4, **dadurch gekennzeichnet, dass** die vorgenannte Einrichtung zur Festlegung der Winkellage mindestens eines Armes (4a-5b) eine Lochplatte (11) mit mehreren ein Lochbild festlegenden Öffnungen (12) aufweist, durch die ein Verriegelungselement (14) hindurchführbar ist, weiches mit dem zugeordneten Arm (4a, 4b; 5a, 5b) der Gelenkschere (4; 5) verbindbar ist.

6. Transportfahrzeug nach einem der vorangehenden Ansprüche, **dadurch gekennzeichnet, dass** das Fahrwerk (2) des Transportfahrzeugs (1) eine Anzahl von Radanordnungen (3) aufweist.

7. Transportfahrzeug nach Anspruch 6, **dadurch gekennzeichnet, dass** mindestens eine Radanordnung (3) des Fahrwerks (2) des Transportfahrzeugs (1) lenkbar ist.

8. Transportfahrzeug nach einem der vorangehenden Ansprüche, **dadurch gekennzeichnet, dass** das Transportfahrzeug (1) eine Einrichtung (20) zur Änderung der Winkellage der Arme (4a, 4b; 5a, 5b) der von ihm beaufschlagten Gelenkschere (4; 5) aufweist.

9. Transportfahrzeug nach Anspruch 8, **dadurch gekennzeichnet, dass** die vorgenannte Einrichtung (20) an mindestens zwei Gelenkscheren (4; 5) angreift.

10. Transportfahrzeug nach Anspruch 8 oder 9, **dadurch gekennzeichnet, dass** die Einrichtung (20) zur Änderung der Winkellage der Arme (4a, 4b; 5a, 5b) mindestens einer Gelenkschere (4; 5) ein doppelt-wirkender Zylinder (21) ist.

## Claims

1. Transport vehicle, in particular a self-propelled transport vehicle, which has a chassis (2) comprising at least two load carriers (2a, 2b) being arranged side by side and distant from each other, whose mutual distance can be changed for varying the width of the transport vehicle (1), **characterized in that** at least two load carriers (2a, 2b) of the transport vehicle (1) are connected by at least one scissor link (4, 5), that at least one scissor link (4, 5) comprises two arms (4a, 4b; 5a, 5b), whose first end portions (4a', 4b'; 5a', 5b') are hingedly connected with one load carrier (2a; 2b) and whose second end portions (4a", 4b"; 5a", 5b") are connected via a joint (4c; 5c), that at least one scissor link (4, 5) comprises two arms (4a, 4b; 5a, 5b), so that the first end portion (4a'; 5a') of the first arm (4a; 5a) is pivotally connected with the first end portion (4a'; 5a') of the first arm (4a; 5a) and the first end portion (4b'; 5b') of the second arm (4b; 5b) of said scissor link (4; 5) is pivotally connected with the second load carrier (2b), so that the second end portion (4a"; 5a") of the first arm (4a; 5a) and the second end portion (4b"; 5b") of the second arm (4b; 5b) are connected via a joint (4c, 5c).

2. Transport vehicle according to claim 1, **characterized in that** between adjacent load carriers (2a, 2b) two scissor links (4, 5) are arranged.

3. Transport vehicle according to one of the previous claims, **characterized in that** at least two load carriers (2a, 2b) are connected via at least one length-adjustable cross beam (2c).

4. Transport vehicle according to one of the previous claims, **characterized in that** each scissor link (4; 5) has got at least one means (10) for defining the angular position of an arm (4a, 4b; 5a, 5b) relatively to the associated load carrier (2a, 2b).

5. Transport vehicle according to claim 4, **characterized in that** the aforementioned means for defining the angular position of at least one arm (4a-5b) comprises a perforated plate (11) with several openings (12) defining a hole pattern, through which a locking element (14) can be lead through, which can be connected with a corresponding arm (4a, 4b; 5a, 5b) of the scissor link (4; 5).

6. Transport vehicle according to one of the previous claims, **characterized in that** the chassis (2) of the transport vehicle (1) comprises a plurality of wheel assemblies (3).

7. Transport vehicle according to claim 6, **characterized in that** at least one wheel assembly (3) of the chassis (2) of the transport vehicle (1) is steerable.

8. Transport vehicle according to one of the previous claims, **characterized in that** the transport vehicle (1) comprises a device (20) for changing the angular position of the arms (4a, 4b; 5a, 5b) of the scissor link (4; 5) impacted by it.

9. Transport vehicle according to claim 8, **characterized in that** said device (20) engages on at least two scissor links (4; 5).

10. Transport vehicle according to claim 8 or 9, **characterized in that** the device (20) for changing the angular position of the arms (4a, 4b; 5a, 5b) of at least one scissor link (4; 5) is a double-acting cylinder (21).

## Revendications

1. Véhicule de transport, notamment véhicule de transport automoteur, qui présente un châssis (2) avec au moins deux supports de charge (2a, 2b) agencés l'un à côté de l'autre et espacés l'un par rapport à l'autre, dont la distance réciproque peut être modifiée pour la modification de la largeur du véhicule de transport (1), **caractérisé en ce qu'**au moins deux supports de charge (2a, 2b) du véhicule de transport (1) sont reliés l'un à l'autre par au moins un ciseau articulé (4, 5), **en ce qu'**au moins un ciseau articulé (4, 5) présente deux bras (4a, 4b ; 5a, 5b), dont les premières zones d'extrémité (4a', 4b' ; 5a', 5b') sont reliées de manière articulée à respectivement un support de charge (2a ; 2b) et dont les deuxièmes zones d'extrémité (4a", 4b" ; 5a", 5b") sont reliées par le biais d'une articulation (4c ; 5c), l'au moins un ciseau articulé (4, 5) présente deux bras (4a, 4b ; 5a, 5b) si bien que la première zone d'extrémité (4a' ; 5a') du premier bras (4a ; 5a) est reliée de manière articulée au premier support de charge (2a) et la première zone d'extrémité (4b' ; 5b') du deuxième bras (4b ; 5b) de ce ciseau articulé (4 ; 5) est reliée de manière articulée au deuxième support de charge (2b), et si bien que la deuxième zone d'extrémité (4a" ; 5a") du premier bras (4a ; 5a) et la deuxième zone d'extrémité (4b'' ; 5b") du deuxième bras (4b ; 5b) sont reliées l'une à l'autre par le biais d'une articulation (4c, 5c).

2. véhicule de transport selon la revendication 1, **caractérisé en ce que** deux ciseaux articulées (4, 5) sont agencés entre les supports de charge (2a, 2b) adjacents.

3. Véhicule de transport selon l'une quelconque des revendications précédentes, **caractérisé en ce qu'**au moins deux supports de charge (2a, 2b) sont reliés l'un à l'autre par au moins une traverse (2c) à longueur variable.

4. Véhicule de transport selon l'une quelconque des revendications précédentes, **caractérisé en ce que** chaque ciseau articulé (4 ; 5) présente au moins un dispositif (10) pour la fixation de la position angulaire d'un bras (4a, 4b ; 5a, 5b) par rapport au support de charge (2a, 2b) attribué.

5. Véhicule de transport selon la revendication 4, **caractérisé en ce que** le dispositif susmentionné pour la fixation de la position angulaire d'au moins un bras (4a-5b) présente une plaque perforée (11) avec plusieurs ouvertures (12) définissant une configuration de trous, par lesquelles un élément de verrouillage (14) peut être guidé, lequel peut être relié au bras (4a, 4b ; 5a, 5b) attribué du ciseau, articulé (4 ; 5).

6. Véhicule de transport selon l'une quelconque des revendications précédentes, **caractérisé en ce que** le châssis (2) du véhicule de transport (1) présente un certain nombre d'agencements de roues (3).

7. Véhicule de transport selon la revendication 6, **caractérisé en ce qu'**au moins un agencement de roues (3) du châssis (2) du véhicule de transport (1) est dirigeable.

8. Véhicule de transport selon l'une quelconque des revendications précédentes, **caractérisé en ce que** le véhicule de transport (1) présente un dispositif (20) pour la modification de la position angulaire des bras (4a, 4b ; 5a, 5b) du ciseau articulé (4 ; 5) qu'il sollicite.

9. Véhicule de transport selon la revendication 8, **caractérisé en ce que** le dispositif (20) susmentionné agit sur au moins deux ciseaux articulés (4 ; 5).

10. Véhicule de transport selon la revendication 8 ou 9, **caractérisé en ce que** le dispositif (20) pour la modification de la position angulaire des bras (4a, 4b ; 5a, 5b) d'au moins un ciseau articulé (4 ; 5) est un vérin à double effet (21).
